# EUROPEAN PATENT SPECIFICATION

(11) **EP 2 560 747 B1**
(45) Date of publication and mention of the grant of the patent: **15.04.2015**
(21) Application number: 11732412.9
(22) Date of filing: 06.07.2011
(51) Int. Cl.: B01D 63/04, B01D 65/00, C02F 1/44, B01D 61/18

(54) **PRESSURE VESSEL WITH MULTI MEMBRANE MODULES IN PARALLEL**
DRUCKGEFÄSS MIT PARALLEL ANGEORDNETEN MULTIMEMBRANMODULEN
RÉCIPIENT À MEMBRANES MULTIPLES

(30) Priority: 07.07.2010 EP 10168697
(43) Date of publication of application: 27.02.2013
(73) Proprietor: Siemens Aktiengesellschaft, 80333 München (DE)
(72) Inventor: DRIVARBEKK, Kristin Helen Blume, N-1353 Baerums Verk (NO); HUNTER, Scott, N-0172 Oslo (NO); MEHLEN, Mari, N-0591 Oslo (NO); OPHAUG, Arvid, N-7549 Tanem (NO); STORLI, Andreas Lind, N-0467 Oslo (NO)
(86) International application number: PCT/EP2011/061406
(87) International publication number: WO 2012/004304

(56) References cited:
- WO-A1-2005/056167
- WO-A1-2011/157835
- JP-A- 2000 051 670
- US-A- 4 016 078
- US-A- 4 876 006
- US-A1- 2008 011 157
- US-A1- 2008 105 605

## Description

The invention is directed to multi membrane pressure vessel with integrated bottom distribution and top collector system.

Ultrafiltration is a type of filtration, other types of filtration may be microfiltration or nanofiltration. Ultrafiltration is employed to separate or remove particles larger than sizes of about 0.01-0.1 µm - depending upon the pore sizes of the ultrafiltration unit - in order to purify or to recycle a fluid flow. Ultrafiltration (abbreviation: UF) is a variety of membrane filtration in which typically hydrostatic pressure forces a liquid against a semipermeable membrane. Suspended solids and solutes of high molecular weight are retained, while water and low molecular weight solutes pass through the membrane.

Ultrafiltration is a separation process using membranes with pore sizes typically in the range of 0.1 to 0.001 micron.

Ultrafiltration allows to purify, separate, and concentrate target macromolecules in continuous systems. This is done by pressurising the solution flow and guiding this pressurised solution through an ultrafiltration membrane. The solvent and other dissolved components that pass through the membrane are known as "permeate". The components that do not pass through are known as "retentate". Depending on the pore sizes of the membrane used in relation to the particle sizes, macromolecules may be purified, separated, or concentrated in either fraction.

In prior art products, water treatment is done by a plurality of ultrafiltration modules, each module may be substantially a cylinder comprising one or several ultrafiltration membranes. The membrane may be mainly of capillary and/or hollow fibre type. Each module may have its own housing with connectors for fluid supply or fluid drain.

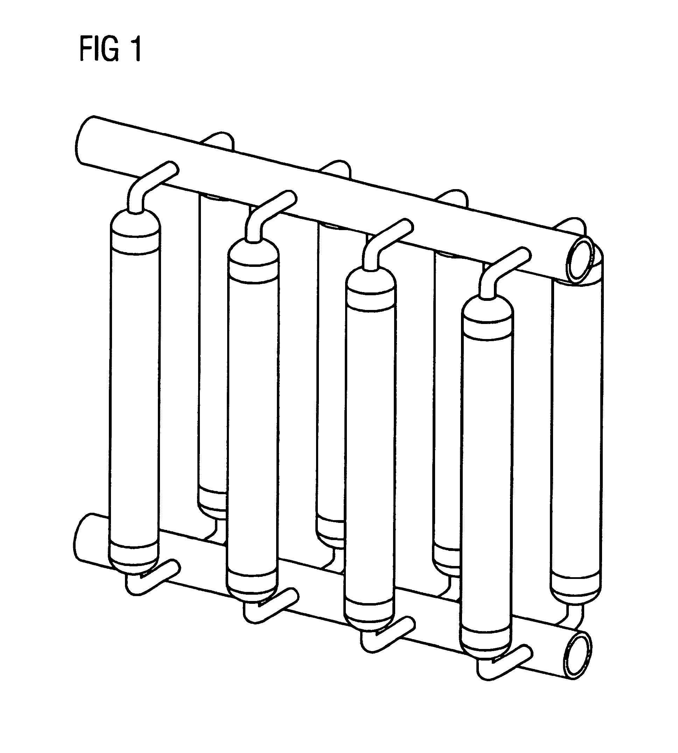

For industrial large scale filtration systems, e.g. for purifying a large amount of water, a plurality of these modules are provided for one filtration system. Typically they are arranged in rows and columns, typically in parallel configuration, each module having a separate inlet and outlet tubes to provide a fluid flow through the module. A typical arrangement can be seen schematically in Fig. 1.

To provide a sufficient filtration throughput, the overall filtration system requires a large filtering surface which can be reached by a necessary number of filtration modules. This may lead to a large footprint of the overall filtration system.

Thus, it is a goal to provide a modified ultrafiltration system that results in a more compact arrangement.

Patent publications US 4,876,006 A and JP 2000 051670 A show compact cylindrical arrangements of filtration systems, both providing also a back wash arrangement for cleaning the filtration system.

It is also a specific goal to provide an alternative or improved solution for backwashing of such a cylindrical ultrafiltration system.

### SUMMARY OF THE INVENTION

The present invention seeks to mitigate the mentioned drawbacks.

This objective is achieved by the independent claims. The dependent claims describe advantageous developments and modifications of the invention.

According to the invention a pressurised filtration vessel, particularly in cylindrical form, is provided, as defined in claim 1.

In more detail and partly repetitive, the filter element is comprised of a plurality of vertically arranged filtration membrane modules, particularly ultrafiltration membrane modules. The filtration membrane modules each are comprised of a plurality of cylindrical hollow fibre elements for filtering a to be filtered fluid. The distributor is located at a bottom end and is connected to an inlet for distributing an input fluid to the filter element. The collector is connected to an outlet for collecting an output fluid from the filter element. As said, the filter element is located between the distributor and the collector. The distributor is arranged to guide to be filtered fluid to cylindrical outer surfaces of the plurality of filtration membrane modules. The plurality of filtration membrane modules are configured that to be filtered fluid is fed via the cylindrical outer surfaces. A scouring plate is also provided, the scouring plate providing air holes directed to a surface of the filtration membrane modules. The scouring plate is fed by scouring air via air channels, wherein the air channels are provided from a bottom distribution plate integrated into the support plate to the scouring plate.

During operation, a to be filtered liquid or multiphase fluid - the input fluid - may be supplied under pressure to the distributor. The distributor may be arranged such that the fluid is distributed to all of the plurality of filtration membrane modules. Preferably the same amount of fluid is supplied to all of the surfaces of each of the filtration membrane modules.

In a preferred embodiment the distributor may be arranged substantially as an elliptic paraboloid with an opening for connection to the inlet at a tip of the elliptic paraboloid. At the time of filing of this patent application an example of an elliptic paraboloid can be seen on the web page http://mathworld.wolfram.com/EllipticParaboloid.html or is known substantially from the form of satellite dishes to define what is meant by the term elliptic paraboloid.

According to the invention the distributor and the collector may be each built as a single piece, i.e. formed integrally. Specifically a system of pipes may not be considered to be a distributor or a collector according to the invention. The distributor and the collector may be free of pipes, i.e. pipe-less.

Each of the plurality of filtration membrane modules may comprise a plurality of filtration membranes for filtering the input fluid, each of the filtration membranes may be in cylindrical form and may be built from carbon and/or fibre to provide the filtering effect. Preferably the to be filtered input fluid is provided to the filtration membrane via its cylindrical side surface such that the fluid can - in parts without the to be filtered particles - pass radially inwards into the body of the filtration membrane.

Purified fluid passing the filtration membranes - the output fluid, will reach the collector via which the fluid collected and distributed to the outlet.

This arrangement allows a filtration of a fluid with a very compact design, as all filtration membrane modules are arranged in a single vessel. Only a single housing may be necessary for the overall vessel and no specific housing is necessary for the filtration membrane modules. As the distribution and collection of the fluid is done by single elements - the distributor and the collector - without using a system of pipes, a very fail-safe system can be provided via which leakages from the pipes can be avoided or at least reduced. The number of parts can be reduced significantly. The footprint and the weight of the vessel may be less than a prior art solution.

Nevertheless the vessel remains a modular design. Installation of the vessel may be quick and easy. The vessel may be installed from pre-assembled parts.

In a preferred embodiment the vessel is characterised in that the plurality of filtration membrane modules may positioned on a first end via a retaining plate and on a second end via a support plate. The first end is the end in direction of the inlet, the second end the end in direction of the outlet. This allows having a very robust and stiff implementation by only using little material as support structure.

The retaining plate and/or the support plate may possibly be arranged as a disc with recesses, each recess having the size of a cross section of one of the plurality of filtration membrane modules, the cross section being perpendicular to an axis of the respective filtration membrane module. Typically the retaining plate and the support plate may be substantially similar in overall form, but typically will differ in regards of the position and occurrence of through holes.

In a further preferred embodiment a guide plate may be present between the first end and the second end. The guide plate may be arranged as a disc comprising blanked out punchings, each punching having the size of a cross section of one of the plurality of filtration membrane modules, the cross section being perpendicular to an axis of the respective filtration membrane module. Preferably a filtration membrane module may be cylindrical and a respective punching may be circular. Such a guide plate may provide a wanted stiffness of the vessel structure. Besides, a guide plate may give support or guidance for inserting the filtration membrane modules.

With the punchings and/or the recesses it is possible to keep the plurality of filtration membrane modules in position, preferably parallel to each other.

Preferably the recesses of one of the support plates each may have a central hole through which the output fluid may be guided to the outlet.

Preferably the recesses of one of the support plates each may have a small central hole through which fluid may be guided to drain the filtration membrane modules.

In a further preferred embodiment the plurality of filtration membrane modules each may have cylindrical form and may be arranged parallel to each other, such that the filtration membrane modules may be arranged in a substantially honeycomb-like or grid-like or hexagonal structure. The filtration membrane modules may be fixed via the punchings and/or the recesses that are arranged in the substantially honeycomb-like or grid-like or hexagonal structure. The punchings and/or recesses may be staggered, preferably staggered by the radius of the cylindrical filtration membrane modules.

This is advantageous as this allows a very compact design as the distance between the filtration membrane modules can be minimised. Therefore such a compact vessel can even be used in space restricted areas, like offshore installations. Offshore installations may be oil or gas platforms, installations on the sea bed, or on ships. Nevertheless the compact design may also be considered advantageous for onshore installations.

In a preferred implementation of the invention, the collector may be arranged such that the output fluid is funnelled into a nozzle during operation. For this the collector may have depressions or corrugations. The collector may also be a dish of concave form with a central opening as an outlet for the fluid. This dish may have ribs so that the collector becomes more rigid. In other words, the collector may be arranged substantially as an elliptic paraboloid with an opening for connection to the outlet at a tip of the elliptic paraboloid.

The distributor may also have depressions or corrugations. Preferably both the distributor and the collector may be substantially of the same shape and may even be identical parts. They may be assembled in opposite orientation to each other.

Preferably the fluid will be provided to the vessel under pressure. Besides, the filtration membranes will be oriented vertically such that it may also operate gravity-driven.

It has to be noted that embodiments of the invention may have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- FIG. 1: shows schematically a prior art ultrafiltration system;
- FIG. 2: illustrates a filtration vessel;
- FIG. 3: shows a more detailed view of the distributor, collector, the support plate and the retaining plate incorporated in the vessel;
- FIG. 4: illustrates a filtration vessel focusing on scouring of the system;
- FIG. 5: illustrates scour plates;
- FIG. 6: focuses on an embodiment of the retaining plate;
- FIG. 7: shows an implementation of the distributor;
- FIG. 8, 9: illustrates a filtration vessel focusing on scouring of the system.

The illustration in the drawing is schematical. It is noted that for similar or identical elements in different figures, the same reference signs will be used.

Some of the features and especially the advantages will be explained for an assembled ultrafiltration system during operation, but obviously the features can be applied also to the single components of the ultrafiltration system but may show the advantages only once assembled and during operation. None of the details given should be limited to an ultrafiltration system while in operation.

### DETAILED DESCRIPTION OF THE INVENTION

Ultra filtration membranes for water treatment are usually directed for onshore needs. Such type of filtration membranes can possibly be disadvantageous in one of the following respects, as they are typically arranged in a design like it is shown in FIG. 1:
- Space and weight constraints,
- Design pressure constraints,
- Maintenance time,
- Life cycle cost,
- Health, Safety, Security, and Environment (HSSE) issues.

Such a filtration system may be composed of filtration membrane modules, which may be a pressurised, pre-engineered membrane system. A modular "building block" configuration can simplify design, reduces installation and makes operation easy. A hollow-fibre technology may be used to provide a verifiable barrier, assuring virus, turbidity, suspended solids, and pathogen removal. For example a system may allow up to 40 million liters per day of treated water capacity on one skid.

The filtration system may be a gravity-driven system.

It may replace systems that require coagulants for pretreatment of fluid provided to reverse osmosis applications such as treatment of drinking water, desalination, reuse and industrial applications.

A manifold system may be needed to distribute and collect fluids, isolate individual modules or pre-load membrane modules. It is advantageous if components are interchangeable. The manifold system may be an external distribution and collecting system containing numerous parts, like pipes and conduits.

As an example, a system described above may have a design pressure of 6 bar (i.e. 6 * 10⁵ Pa) above the atmospheric pressure.

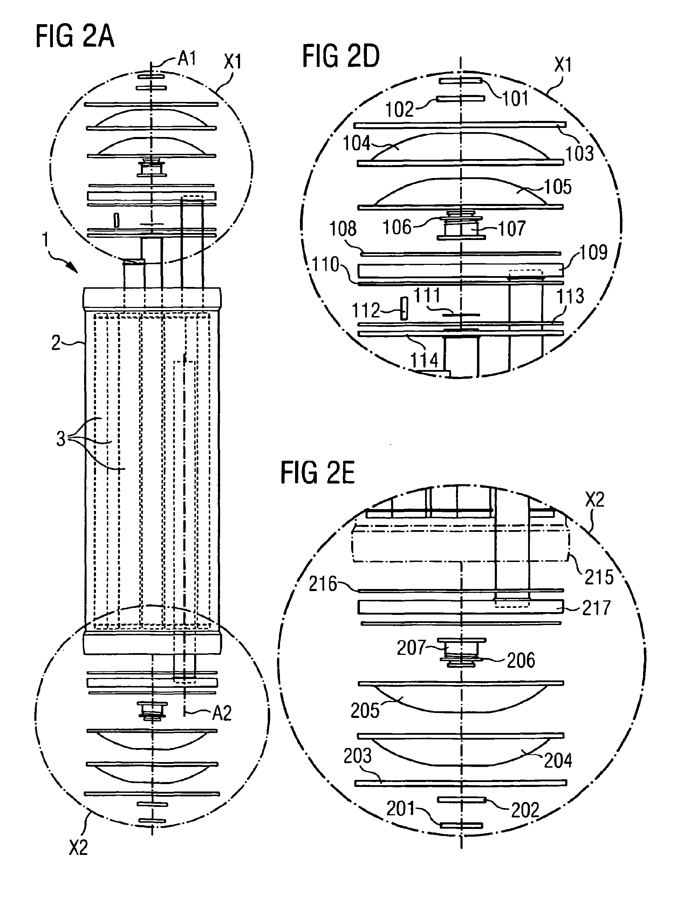

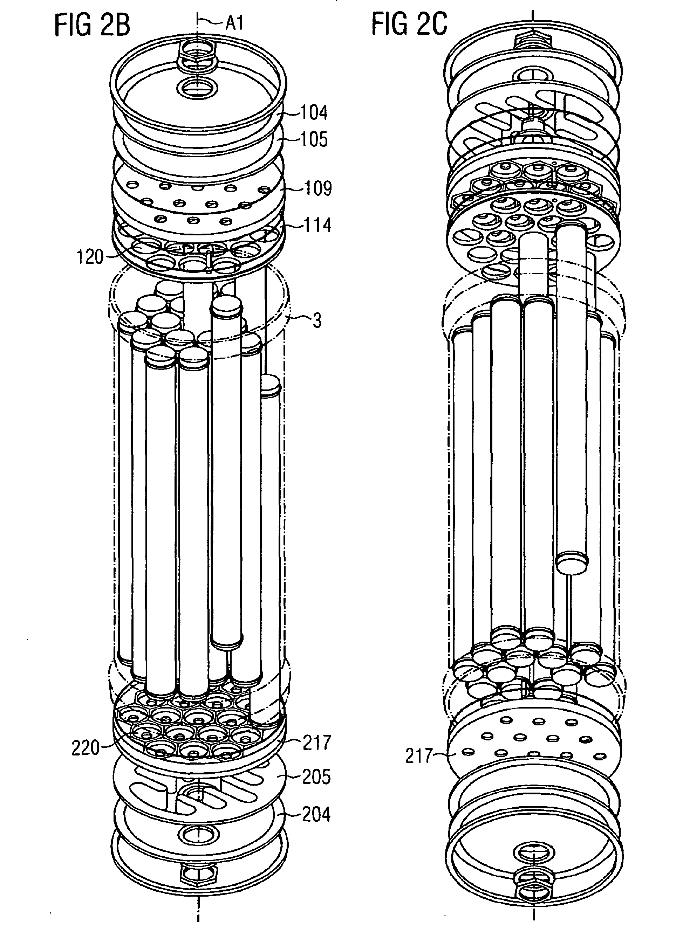

Based on such a prior art design, a new inventive arrangement is proposed based on FIG. 2. The new arrangement may keep some of the features and some of the advantages of the previously disclosed design - e.g. modularisation - but will add extra benefit, e.g. smaller footprint of the overall system.

The to be discussed filtration vessel may be an ultrafiltration vessel, but possibly concepts of this vessel may also be applied to other types of filtration as long as no obstacles are present that would stop a skilled person to apply the inventive technology also to other forms of filtration, like microfiltration, nanofiltration, or even reverse osmosis.

Referring now to FIG. 2, an inventive vessel 1 is shown in an exploded view from different angles. FIG. 2A provides a side view, FIG. 2B a side view from an elevated position, and FIG. 2C a side view from a position slightly below the vessel. FIG. 2D shows an exploded view of a first end of the vessel 1 in a more detailed view, as indicated by a first circle in FIG. 2A. FIG. 2E shows an exploded view of a second end of the vessel 1 in more detail, as indicated by a second circle in FIG. 2A. All these figures show the very same configuration.

It is assumed that the vessel 1 is oriented in a vertical way. The vessel may be symmetric about an axis A1. The internal structure of the vessel 1 may not be perfectly axial symmetric, as a plurality of filtration membrane modules 3 will be present within a body of the vessel 1. Preferably the filtration membrane modules 3 will be arranged such that they may be located point symmetric about the axis or may be mirror symmetric in respect to a plane defined by the axis A1 and a radial component perpendicular to the axis A1.

In the following the components of the vessel are explained in the order as they are located from top to bottom - in reverse of the fluid flow when in filtering operation. A top portion of the vessel comprises a lock nut 101, a spacer 102, a locking ring 105, a dished endcap 104, a collection manifold 105 as a collector, a removable nozzle gasket 106, a removable nozzle 107 as an outlet, a retaining plate top gasket 108, a retailing plate 109, a retaining plate gasket 110, a membrane seal gasket 111, locating pins 112.

The removable nozzle 107 is providing a connection to a pipe system such that the filtered fluid can be guided away via the pipe system. The fluid may be the filtered liquid or multiphase solution which at this stage is cleared from included particles, viruses, etc.

The dished endcap 104 may be considered part of an external housing 215 of the vessel 1.

The collection manifold 105 may be in form of a dish with some ribs in the recess to guide and distribute the fluid to a plurality of filtration membrane modules 3 as filter element 2.

During operation the fluid will be discharged at the filtration membrane modules 3 via a top end of the respective filtration membrane module 3. The fluid will pass through a plurality of holes in the retaining plate 109, which has cylindrical recesses, each recess configured to match a top end of a corresponding filtration membrane module 3.

For each recess in the retaining plate 109, a corresponding filtration membrane module 3 is present, that has a top end that matches the form of the recess of the retaining plate 109.The filtration membrane modules 3 are configured such that the filtered fluid can be discharged via its top end.

Each filtration membrane module 3 may be substantially symmetric about an axis A2 and may be comprised of a plurality of cylindrical hollow fibre elements for filtering the fluid. Alternatively other ways of filtering may be used within the filtration membrane module 3. Filtering may take place by providing the to be filtered multiphase fluid to the outside of the cylindrical hollow fibre under pressure. "Pure" fluid will pass through. Solids may be retained.

In an axially central region of the filtration membrane modules 3, the vessel 1 may also comprise one or several guide plates 114 that provide a support for the elongated filtration membrane modules 3. The guide plate gasket 113 may have a disk-like shape. Its outer radial surface may be connected to the housing 215. The guide plate 114 may have a plurality of punchings 120 that each correspond to an outer surface structure of the filtration membrane module 3.

The locating pins 112 may be present for alignment of the collection manifold 105 and/or the retaining plate 109 and/or the guide plate 113.

Continuing to describe the vessel 1 from top to bottom, following the plurality of filtration membrane modules 3 a fairly similar design is present as described before, only in a reverse order. The plurality of filtration membrane modules 3 may be followed by a support plate gasket 216 and a support plate 217. The vessel 1 then further comprises removable nozzle 207, a removable nozzle gasket 206, a distribution manifold 205, a dished endcap 204, a locking ring 203, a spacer 202, and a lock nut 201.

The to be filtered fluid may be fed to the vessel 1 from the bottom end. It will enter the vessel 1 and will be distributed by the distribution manifold 205 to the side surfaces of the filtration membrane modules 3. Bottom ends of the filtration membrane modules 3 are caught by opposing recesses 220, which each may have drain holes. Furthermore the support plate 217 may have feeding holes to let pass the to be filtered fluid from a "basin" of the distribution manifold 205.

The distribution manifold 205 may distribute the fluid overall the cross section of the vessel 1 due to its concave form. The distribution manifold 205 may have ribs to guide the fluid from a central hole of the distribution manifold 205 and/or to provide stiffness to the distribution manifold 205.

The dished endcap 104 may be considered part of the external housing 215 of the vessel 1, the dished endcap 104 closing the vessel 1 in axial direction.

The described components are surrounded by the cylindrical housing 215, which may be of carbon fibre or epoxy and which may close the vessel 1 in radial direction along it axial stretch.

The removable nozzle 207 is providing a connection to a pipe system for the to be filtered fluid which is external to the vessel 1. The fluid may be provided by a tank or a supply and may be the to be filtered liquid or multiphase solution which may include particles, viruses, etc. The fluid as provided to the vessel 1 may be pressurised.

Once assembled and in operation, a to be purified fluid will enter the vessel 1 from the bottom via the removable nozzle 207. The fluid will be spread in radial direction by the distribution manifold 105, passing through holes within the support plate 217, so that the fluid is provided to all the present filtration membrane modules 3. By passing through the side walls of the filtration membrane modules 3 and through filtration membrane modules 3 the fluid will be filtered. Particles of a size greater than a given threshold will be withheld on the surface of or in the filtration membrane modules 3. The purified fluid will be exiting the filtration membrane modules 3 at its top ends, passing into the collection manifold 105 via holes in the retaining plate 109. The collection manifold 105 will collect the filtered fluid like a funnel and will provide the fluid via a central hole to the removable nozzle 107, so that the filtered fluid can be guided away via a system of pipes.

The collection manifold 105 may have ribs to guide the fluid to the central hole of the collection manifold 105 and/or to provide stiffness to the collection manifold 105.

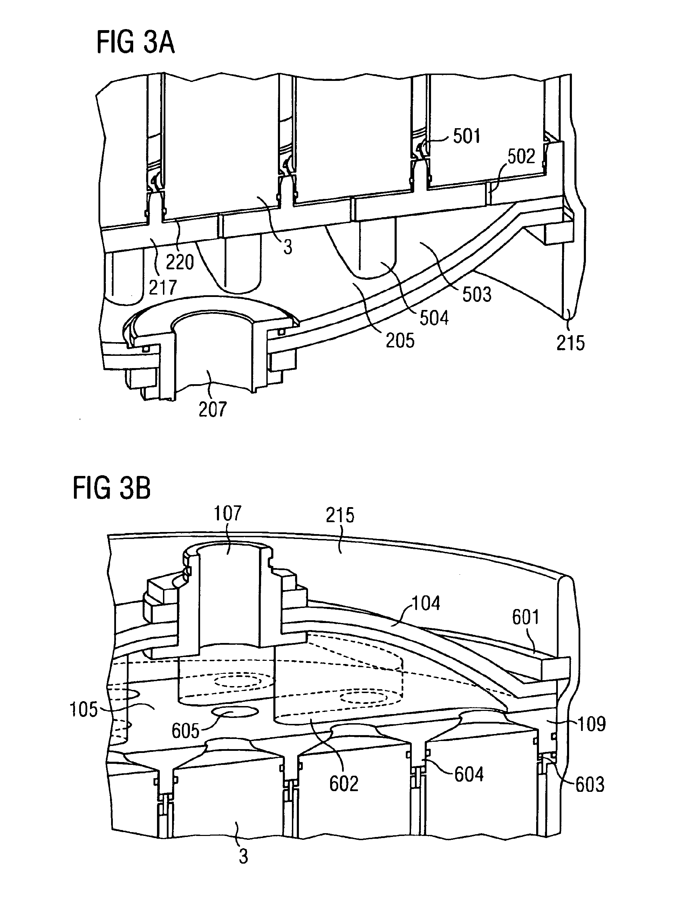

In FIG. 3A a more detailed view of the distributor 205 and the support plate 217 is shown in a sectional view. The distributor 205, which is bearing against the support plate 217 defines a cavity 503 with supporting ribs 504. The support plate 217 is also in direct contact with the ribs 504. In the support plate 217 small holes are provided. These small holes are membrane drain holes 502 that allow drainage of the membranes 3. Furthermore air/water jackets 501 are provided as an interface between a membrane 3 and a recess 220 of the support plate 217. The to be filtered fluid is forced with pressure through the air/water jackets 501.

In FIG. 3B a more detailed view of the collector 105, the dished endcap 104, and the retaining plate 109 is shown in a sectional view. During operation, the filtrate is forced from the membrane 3 through collection holes 605 in the retaining plate 109, so that it will accumulate in the hollow space of of the collector 105 and further onto a discharge piping via the nozzle 107. The collector 105 is built as a cavity with ribs 602. The dished endcap 104 is held in place via an upper locking ring 601. The collector 105 is bearing against the retaining plate 109, e.g. via the ribs 602. A seal 603 may be present so that the to be filtered fluid will be kept between a bottom and an upper end of the membrane 3 so that all fluid needs to pass the outside surface of the membrane 3 and therefore will be filtered. Furthermore, with arrow 604 it is shown how the membrane 3 will be inserted in recesses of the retaining plate 109.

A collector and/or a distributor may be a substantially dish-like body, having an outer rotational symmetrical convex surface and an inner concave surface, and a central hole. Comb-like ribs may be present that extend from a circular rim in radial inward direction, the rim and the ribs forming a flat surface with recessions in between the ribs. The ribs particularly do not extend from one end of the rim to another end but may be noncontinuous. Particularly, a plane of symmetry can be defined, such that the collector is axial symmetric to the plane of symmetry. The ribs then look like two combs facing each other with their teeth. Additionally, the ribs particularly may extend axially from the flat surface to the inner concave surface.

The collector may be arranged to be able to discharged fluid via its central hole, the fluid entering from the wide end of the collector.

The distributor may be arranged substantially the same as the collector, but arranged opposite to the collector during operation, such that fluid entering via its central hole will be discharged via its wide end.

The form of the ribs of the collector or distributor may be adapted to the form of an adjacent support plate or retaining plate.

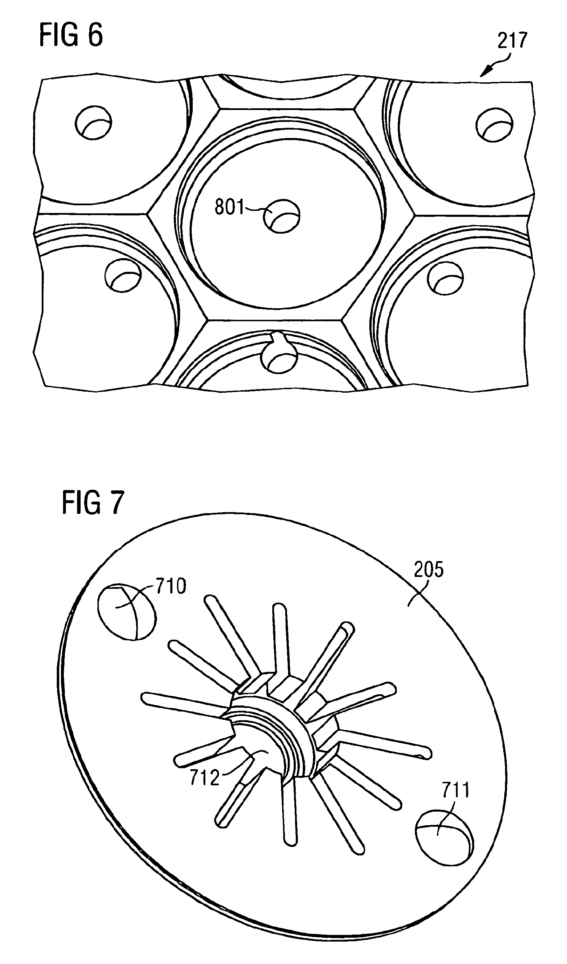

Another implementation of a distributor will later be seen in Fig. 7.

The support plate may be a disc with a plurality of recesses, with a hole in the centre of each recess. The recesses show a honeycomb-like structure, even though the recesses may be circular disc-like cavities. Recesses may be arranged as close as possible to each other to obtain a maximum possible packing density. The recesses should show a matching form of an end of the filtration membrane modules, which may be cylindrical. The radial surfaces of the retaining plate may lie merely in three different planes parallel to each other.

The retaining plate may be arranged substantially the same as the support plate, but arranged opposite to the support plate to clamp or lock the plurality of filtration membrane modules in between.

The guide plate may be arranged substantially the same as the support plate, but only differing that the recesses are replaced by through holes with substantially the same shape as the recesses and matching an outer circumferential surface shape of the filtration membrane modules. The guide plate comprises struts between the through holes.

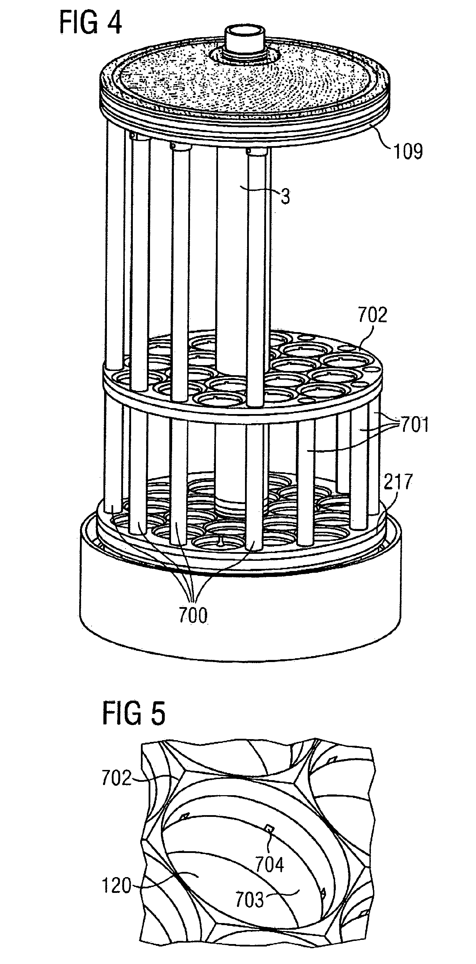

Fig. 4 to 8 focus on a ultrafiltration vessel with an air scouring and the components that are adapted to allow air scouring.

An inlet center opening 712 of the distributor 205 is an inlet for feed water, scour air from the bottom and cleaning fluid. From the center opening 712 feed water, air and/or cleaning fluid is distributed into the vessel to each membrane 3 via a pattern of holes in the distributor 205. This pattern of holes in the distributor is aligned to holes in the support plate 217. There may be two or more different inlets for scour air. The scour air may be injected from bottom of the vessel 1, but there may also be the possibility to inject scour air through air scour plates, e.g. a top scouring plate 702 and a bottom scouring plate 703 which may be fed by scouring air via air channels 701. The top air scouring plate 702 may have internal air channels. Air holes 704 perpendicular to the membrane elements 3 will press scouring air into the core of membrane element 3 and improve the scouring effect of the air during backwash operation. This air scouring plate 702 will also force air from bottom support plate 217 to pass through by entering into the center of membrane element 3. The air channels 701 are provided from a bottom or an upper distribution plate to the air scouring plate 702. Furthermore there may also be channels 700 for return of cleaning fluid from top to bottom.

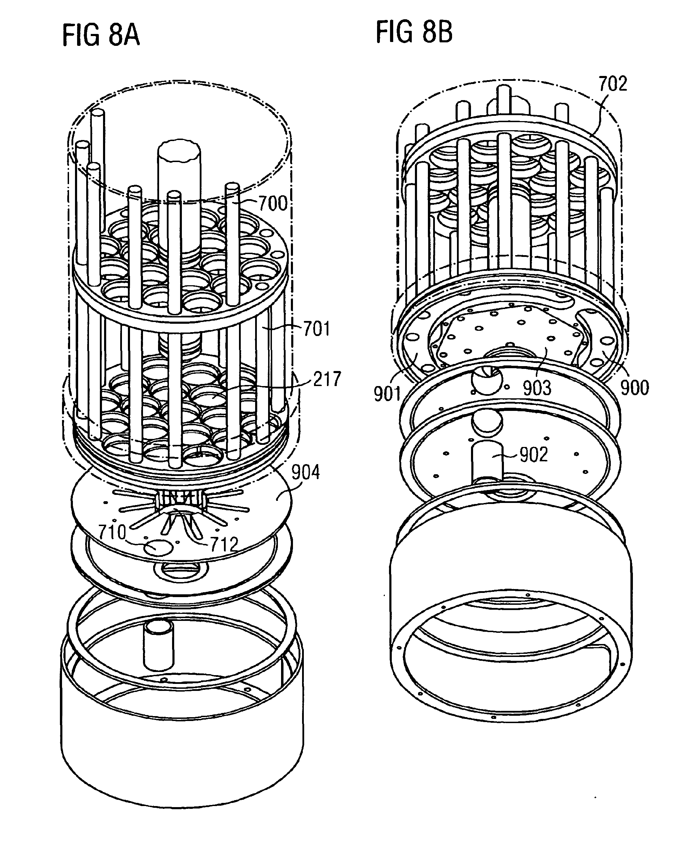

In Fig. 8, an implementation of the support plate 217 is shown. The support plate 217 in which each membrane element 3 is kept in position from a top side of the support plate 217 has a bottom groove 900 at a bottom side of the support plate 217. The bottom groove 900 acts as air scour chamber. The air groove 900 in the support plate 217, is filled with air from a separate inlet pipe during the air scouring. This air pipe is not visible in the different figures, but may be placed symmetrical on the other side of the central inlet pipe to the cleaning fluid outlet pipe.

As shown in Fig. 6, in the bottom of the recess 220 of the support plate 217 a hole 801 is arranged for feed fluid, scouring air, cleaning fluid inlet and drain outlet.

The recesses 220 are arranged such that when the membrane elements 3 are inserted the grooves are wide enough for water and air to pass around into the vessel 1 so that fluid can flow around the membranes 3 during normal operation. When the membranes 3 are backwashed and the system is drained the drain water goes back the same way feed water enter through the support plate 217 and is collected in the distributor 205 for returning through the central opening 712 and an attached pipe to drain.

The groove 900 in the support plate 217, called air scour chamber, is filled with air from a separate inlet pipe during the phase of air scouring. From the bottom groove 900 air is directed into the air scour plate 702 through the channels 701 as air scour pipes. The air scour plate 702 has internal channels in the wall of each punching 120 which guide air jets via air holes 704 perpendicular to all membrane elements 3.

Cleaning fluid enters through the center opening 712, flows through the support plate 217, via air channel 701 and the air scouring plate 702 up to the top of return pipes 700 and back into a return chamber 901. Cleaning fluid is collected in the return chamber 901 and returns via a cleaning outlet 710 through a return nozzle 902.

Fig. 7 shows a further embodiment of the distributor 205 which could be used for the embodiments of figures 4 or 8. In this embodiment the distributor 205 is designed having a substantially flat surface with holes and a star like central cavity, the center opening 712. The central cavity is provided for fluid inlet distribution during normal operation and as a drain collector during backwash. Furthermore the previously introduced cleaning fluid outlet 710 is shown and a hole 711 via which air can be provided to the central air distribution plate 903 integrated in the bottom of the support plate 217. The distribution plate 903 may be sealed from the bottom groove 900 and the return chamber 901 via seal 905.

The distributor 205 can also have bolting holes 904, as shown in Fig. 8.

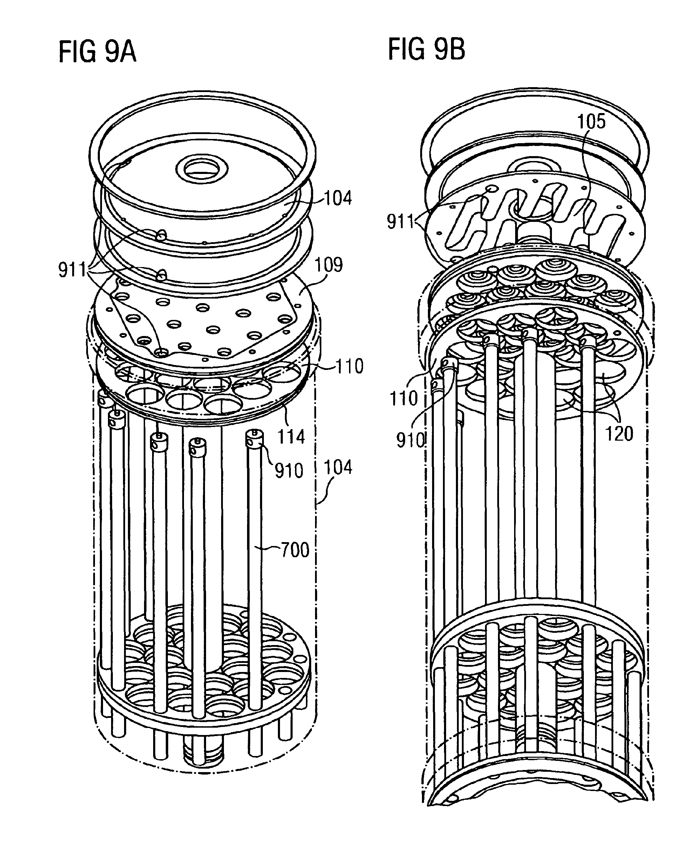

Regarding the top portion of the vessel 1, as further shown in Fig. 9, also the following should be stated:

Cleaning fluid may return from the top portion 910 via return pipes 700. Outlet channels 911 for scouring air enter from underneath the guide plate 114 through the retaining plate 109, collector 105 and top dished endcap 104. The retaining plate 109 covers all membranes 3 and prevents buoyancy to lift the membrane elements 3.

The area between the guide plate 114 and the retaining plate 109 is filled with permeate. The gasket 110 on the rim of the guide plate 114 together with the gaskets 110 around each membrane element 3 is provided for separation between feed and permeate water. The pressure difference within the vessel 1 is across the guide plate 114.

The pattern of ribs 602 and cavity in the top collector 105 collect permeate water from the retaining plate 109 and give support to the retaining plate 109 and thereby also the guide plate 114 during filtration. During back wash the pressurized air drive permeate water remaining in the collector 105 back into the vessels 1 lower part.

The holes 120 in the guide plate 114 guides the membrane elements 3 during installation and give radial sealing for O-rings on each membrane element 3. In addition a groove inside the upper part of the hole 120 gives support to a C-clip mounted on the membrane element 3. The C-clip keeps the membrane element 3 in a fixed vertical position. The support plate 217 may not carry any weight from the membrane elements 3.

A vessel 1 as defined in Fig. 2 or the following figures may allow to have a very compact design. Several vessels 1A, 1B, 1C, ... may be combined to a single filtration system. The different vessels 1A, 1B, 1C, ... may be fluidically connected via pipes. The vessels 1 may be vertically oriented. Not falling into the scope of the claims, possibly also other orientations may be possible, e.g. horizontal orientation.

According to the mentioned embodiments according to FIG. 2-8, the pressure vessel incorporates multi filtration modules in parallel configuration within a single pressure vessel housing which allows for higher operating pressures. As the distribution and collection systems have been made internal and integrated in the pressure vessel design, this may enable a vessel including distribution and collection system with unlimited pressure rating.

This new design reduces the footprint and weight of the system and improves the user operability and maintainability compared to existing known systems. The invention reduces the number of internal parts significantly and hence limits the probability for leakages.

As an example for a reduced footprint, the footprint of a filtration system with 240 membrane modules may be reduced by approximately 70%.

The invention may make use of composite material which reduces weight, increases strength, eliminates corrosion and provides a flexible, non-rigid design. This flexible design eliminates potential for vessel expansion during hazardous exposures, i.e. the use of composite materials eliminates potential for vessel expansion failure and potential hazardous gas release in case of fire.

It is advantageous that existing ultrafiltration standard hollow fibre membrane modules designed for onshore applications can be used. Furthermore the pressure rating of the pressure vessels can be increased from 6 * 10⁵ Pa to 15 * 10⁵ Pa (over atmospheric pressure) for offshore use.

The internal design may be made such that it allows for easy inspection and removal/replacement of single elements. The top end cap with a common locking plate - i.e. the retaining plate and/or the support plate - for membrane sealing can easily be removed enabling access to all single membrane modules in one go. Then each individual membrane seal can be removed enabling operator to remove that specific element without breaking the seals for the other membrane elements. Still, no individual internal parts for each element are required except for the seal itself. The invented sealing system is characterized by a retaining plate (locking the seals) and a support plate (seating the seals and guiding the membranes).

The modular design allows easy fabrication hence minimizing the fabrication time.

Integrated backwashing design for multi elements may also be provided. Particularly multi membrane air scouring and backwashing may be allowed simultaneously.

Further advantages according to the invention or one of the embodiments may be:
1) The feed inlet distribution may be combined with the air distribution reducing the number of vessel connections external to the vessel. No internal connection parts for each individual membrane module are required.
2) Hexagonal distribution pattern of the membrane elements increases packing density thus reducing vessel diameter.
3) Unlimited pressure rating may be possible with respect to design as the distribution and collection systems have been made internal and integrated in the pressure vessel design. Only limiting factors may possibly be the choice of material and sizing of wall thickness.
4) The invention provides an improved maintenance time and easy inspection and removal of single membrane modules due to internal design.
5) Weight reduction, increased strength, corrosion eliminated, and flexible design due to possible use of carbon fibre and/or epoxy materials.
6) Vessel expansion/failure may be eliminated with use of composite materials. Potential hazardous gas release in case of fire may be also eliminated with use of composite materials.

## Claims

1. Pressurisable filtration vessel (1), particularly in cylindrical form, comprising:
- a filter element (2), comprised of a plurality of vertically arranged filtration membrane modules (3), particularly ultrafiltration membrane modules, the filtration membrane modules (3) each comprised of a plurality of cylindrical hollow fibre elements for filtering a to be filtered fluid;
- a distributor (205) at a bottom end connected to an inlet (207) for distributing an input fluid to the filter element (2) ;
- a collector (105) connected to an outlet (107) for collecting an output fluid from the filter element (2);
wherein the filter element (2) is located between the distributor (205) and the collector (105),
wherein the distributor (205) is arranged to guide to be filtered fluid to cylindrical outer surfaces of the plurality of filtration membrane modules (3),
wherein the plurality of filtration membrane modules (3) are positioned at a first end via a support plate (217) and at a second end via a retaining plate (109),
wherein the plurality of filtration membrane modules (3) are configured that to be filtered fluid is fed via the cylindrical outer surfaces,
wherein a scouring plate (702) is provided, the scouring plate (702) providing air holes (704) directed to a surface of the filtration membrane modules (3)
wherein the scouring plate (702) provides blanked out punchings (120) and wherein the air scour plate (702) has internal channels in walls of the punchings (120) which are suitable to guide air jets via the air holes (704) perpendicular to the filtration membrane modules (3), **characterized in that** the scouring plate (702) being fed by scouring air via air channels (701), wherein the air channels (701) are provided from a bottom distribution plate (903) integrated in the support plate (217) to the scouring plate (702).

2. Vessel (1) according to claim 1, **characterised in that** the distributor (205) is arranged substantially as an elliptic paraboloid with an opening for connection to the inlet (207) at a tip of the elliptic paraboloid; and/or
the collector (105) is arranged substantially as an elliptic paraboloid with an opening for connection to the outlet (107) at a tip of the elliptic paraboloid.

3. Vessel (1) according to claim 1 or 2, **characterised in that** the retaining plate (109) and/or the support plate (217) is arranged as a disc with recesses (220), each recess (220) having the size of a cross section of one of the plurality of filtration membrane modules (3), the cross section being perpendicular to an axis (A2) of the respective filtration membrane module (3).

4. Vessel (1) according to any of the preceding claims, **characterised in that** a guide plate (114) is arranged as a disc with blanked out punchings (120), each punching (120) having the size of a cross section of one of the plurality of filtration membrane modules (3), the cross section being perpendicular to an axis (A2) of the respective filtration membrane module (3).

5. Vessel (1) according to any of the preceding claims, **characterised in that** the plurality of filtration membrane modules (3) each have cylindrical form and are arranged parallel to each other, such that the filtration membrane modules (3) being arranged in a substantially honeycomb-like structure.

6. Vessel (1), according to any of the preceding claims, **characterised in that**
the collector (105) is arranged to guide filtered fluid discharged from circular top surfaces of the plurality of filtration membrane modules (3) to the outlet (207) as the output fluid.

7. Vessel (1), according to claim 6, **characterised in that** the plurality of filtration membrane modules (3) are configured that to be filtered fluid is filtered by membranes of the plurality of filtration membrane modules (3) and that the filtered fluid is guided to the circular top surfaces of the plurality of filtration membrane modules (3) for discharge.

8. Vessel (1) according to any of the preceding claims, **characterised in that** the collector (105) is arranged such that the output fluid is funnelled into a nozzle (207) during operation.

9. Vessel (1) according to any of the preceding claims, **characterised in that** the plurality of filtration membrane modules (3) each comprising a plurality of filtration membranes.

10. Vessel (1) according to any of the preceding claims **characterised in that** each of the filtration membrane modules (3) is in cylindrical form.

11. Vessel (1) according to any of the preceding claims **characterised in that** the vessel (1) further comprising air channels (701) for air scouring and/or channels (700) to return cleaning fluid during backwash.

## Patentansprüche

1. Mit Druck beaufschlagbares Filtrationsgefäß (1), insbesondere in zylindrischer Form, welches umfasst:
- ein Filterelement (2), bestehend aus mehreren vertikal angeordneten Filtrationsmembranmodulen (3), insbesondere Ultrafiltrationsmembranmodulen, wobei die Filtrationsmembranmodule (3) jeweils aus mehreren zylindrischen Hohlfaserelementen bestehen, zum Filtern eines zu filternden Fluids;
- einen Verteiler (205) an einem unteren Ende, der mit einem Einlass (207) verbunden ist, zum Verteilen eines Eingangsfluids zu dem Filterelement (2);
- einen Sammler (105), der mit einem Auslass (107) verbunden ist, zum Sammeln eines Ausgangsfluids von dem Filterelement (2) ;
wobei das Filterelement (2) zwischen dem Verteiler (205) und dem Sammler (105) angeordnet ist,
wobei der Verteiler (205) dafür eingerichtet ist, zu filterndes Fluid zu zylindrischen Außenflächen der mehreren Filtrationsmembranmodule (3) zu leiten,
wobei die mehreren Filtrationsmembranmodule (3) an einem ersten Ende über eine Stützplatte (217) und an einem zweiten Ende über eine Halteplatte (109) positioniert sind,
wobei die mehreren Filtrationsmembranmodule (3) so gestaltet sind, dass zu filterndes Fluid über die zylindrischen Außenflächen zugeführt wird,
wobei eine Spülplatte (702) vorgesehen ist, wobei die Spülplatte (702) Luftlöcher (704) aufweist, die zu einer Oberfläche der Filtrationsmembranmodule (3) gerichtet sind,
wobei die Spülplatte (702) Ausstanzungen (120) aufweist, und
wobei die Luftspülplatte (702) innere Kanäle in Wänden der Ausstanzungen (120) aufweist, welche geeignet sind, Luftstrahlen über die Luftlöcher (704) senkrecht zu den Filtrationsmembranmodulen (3) zu lenken;
**dadurch gekennzeichnet, dass** die Spülplatte (702) mit Spülluft über Luftkanäle (701) gespeist wird, wobei die Luftkanäle (701) von einer unteren Verteilungsplatte (903), die in die Stützplatte (217) integriert ist, zu der Spülplatte (702) vorgesehen sind.

2. Gefäß (1) nach Anspruch 1, **dadurch gekennzeichnet, dass** der Verteiler (205) im Wesentlichen als ein elliptisches Paraboloid mit einer Öffnung zur Verbindung mit dem Einlass (207) an einer Spitze des elliptischen Paraboloids ausgebildet ist; und/oder
der Sammler (105) im Wesentlichen als ein elliptisches Paraboloid mit einer Öffnung zur Verbindung mit dem Auslass (107) an einer Spitze des elliptischen Paraboloids ausgebildet ist.

3. Gefäß (1) nach Anspruch 1 oder 2, **dadurch gekennzeichnet, dass** die Halteplatte (109) und/oder die Stützplatte (217) als eine Scheibe mit Vertiefungen (220) ausgebildet ist, wobei jede Vertiefung (220) die Größe eines Querschnitts eines der mehreren Filtrationsmembranmodule (3) aufweist, wobei der Querschnitt senkrecht zu einer Achse (A2) des jeweiligen Filtrationsmembranmoduls (3) ist.

4. Gefäß (1) nach einem der vorhergehenden Ansprüche, **dadurch gekennzeichnet, dass** eine Führungsplatte (114) als eine Scheibe mit Ausstanzungen (120) ausgebildet ist, wobei jede Ausstanzung (120) die Größe eines Querschnitts eines der mehreren Filtrationsmembranmodule (3) aufweist, wobei der Querschnitt senkrecht zu einer Achse (A2) des jeweiligen Filtrationsmembranmoduls (3) ist.

5. Gefäß (1) nach einem der vorhergehenden Ansprüche, **dadurch gekennzeichnet, dass** die mehreren Filtrationsmembranmodule (3) jeweils eine zylindrische Form aufweisen und parallel zueinander angeordnet sind, so dass die Filtrationsmembranmodule (3) in einer im Wesentlichen wabenartigen Struktur angeordnet sind.

6. Gefäß (1) nach einem der vorhergehenden Ansprüche, **dadurch gekennzeichnet, dass**
der Sammler (105) dafür eingerichtet ist, gefiltertes Fluid, das aus kreisförmigen Oberseiten der mehreren Filtrationsmembranmodule (3) ausgetragen wird, als das Ausgangsfluid zu dem Auslass (207) zu leiten.

7. Gefäß (1) nach Anspruch 6, **dadurch gekennzeichnet, dass** die mehreren Filtrationsmembranmodule (3) so gestaltet sind, dass zu filterndes Fluid von Membranen der mehreren Filtrationsmembranmodule (3) gefiltert wird, und dass das gefilterte Fluid zur Austragung zu den kreisförmigen Oberseiten der mehreren Filtrationsmembranmodule (3) geleitet wird.

8. Gefäß (1) nach einem der vorhergehenden Ansprüche, **dadurch gekennzeichnet, dass** der Sammler (105) derart eingerichtet ist, dass das Ausgangsfluid während des Betriebs in eine Düse (207) eingeleitet wird.

9. Gefäß (1) nach einem der vorhergehenden Ansprüche, **dadurch gekennzeichnet, dass** die mehreren Filtrationsmembranmodule (3) jeweils mehrere Filtrationsmembranen umfassen.

10. Gefäß (1) nach einem der vorhergehenden Ansprüche, **dadurch gekennzeichnet, dass** jedes der Filtrationsmembranmodule (3) eine zylindrische Form aufweist.

11. Gefäß (1) nach einem der vorhergehenden Ansprüche, **dadurch gekennzeichnet, dass** das Gefäß (1) ferner Luftkanäle (701) zur Luftspülung und/oder Kanäle (700) zur Rückführung von Reinigungsfluid während der Rückspülung umfasst.

## Revendications

1. Récipient (1) de filtration pressurisable, particulièrement sous forme cylindrique, comprenant :
- un élément (2) de filtre, composé d'une pluralité de modules (3) de membranes de filtration agencés verticalement, particulièrement des modules de membranes d'ultrafiltration, les modules (3) de membranes de filtration composés chacun d'une pluralité d'éléments cylindriques en fibres creuses pour filtrer un fluide devant être filtré ;
- un distributeur (205) à une extrémité de fond connecté à une entrée (207) pour distribuer un fluide d'entrée jusqu'à l'élément (2) de filtre ;
- un collecteur (105) connecté à une sortie (107) pour collecter un fluide de sortie provenant de l'élément (2) de filtre ;
dans lequel l'élément (2) de filtre est situé entre le distributeur (205) et le collecteur (105),
dans lequel le distributeur (205) est agencé de manière à guider un fluide devant être filtré jusqu'à des surfaces extérieures cylindriques de la pluralité de modules (3) de membranes de filtration,
dans lequel la pluralité de modules (3) de membranes de filtration sont positionnés à une première extrémité par l'intermédiaire d'une plaque support (217) et à une deuxième extrémité par l'intermédiaire d'une plaque de retenue (109), dans lequel la pluralité de modules (3) de membranes de filtration sont configurés de manière à ce que le fluide devant être filtré soit alimenté par l'intermédiaire des surfaces extérieures cylindriques,
dans lequel une plaque de lavage (702) est prévue, la plaque de lavage (702) offrant des trous (704) d'air dirigés sur une surface des modules (3) de membranes de filtration,
dans lequel la plaque de lavage (702) offre des perforations (120) occultées et dans lequel la plaque de lavage (702) à l'air a des canaux internes dans des parois des perforations (120) qui sont adaptés à guider des jets d'air par les trous (704) d'air perpendiculairement aux modules (3) de membranes de filtration,
**caractérisé en ce que** la plaque de lavage (702) étant alimentée par de l'air de lavage par l'intermédiaire de canaux d'air (701),
dans lequel les canaux d'air (701) sont prévus d'une plaque de distribution de fond (903) intégrée dans la plaque support (217) jusqu'à la plaque de lavage (702).

2. Récipient (1) selon la revendication 1, **caractérisé en ce que** le distributeur (205) est agencé sensiblement comme un paraboloïde elliptique avec une ouverture pour une connexion à l'entrée (207) au niveau d'une pointe du paraboloïde elliptique ; et/ou
le collecteur (105) est agencé sensiblement comme un paraboloïde elliptique avec une ouverture pour une connexion à la sortie (107) au niveau d'une pointe du paraboloïde elliptique.

3. Récipient (1) selon la revendication 1 ou 2, **caractérisé en ce que** la plaque de retenue (109) et/ou la plaque support (217) sont/est agencée(s) comme un disque avec des évidements (220), chaque évidement (220) ayant la taille d'une section transversale d'un de la pluralité de modules (3) de membranes de filtration, la section transversale étant perpendiculaire à un axe (A2) du module (3) de membranes de filtration respectif.

4. Récipient (1) selon l'une quelconque des revendications précédentes, **caractérisé en ce qu'**une plaque guide (114) est agencée comme un disque avec des perforations (120) occultées, chaque perforation (120) ayant la taille d'une section transversale d'un de la pluralité de modules (3) de membranes de filtration, la section transversale étant perpendiculaire à un axe (A2) du module (3) de membranes de filtration respectif.

5. Récipient (1) selon l'une quelconque des revendications précédentes, **caractérisé en ce que** la pluralité de modules (3) de membranes de filtration ont chacun une forme cylindrique et sont agencés parallèles les uns aux autres, de telle sorte que les modules (3) de membranes de filtration étant agencés en une structure sensiblement de type en nid d'abeilles.

6. Récipient (1) selon l'une quelconque des revendications précédentes, **caractérisé en ce que**
le collecteur (105) est agencé de façon à guider un fluide filtré déchargé de surfaces supérieures circulaires de la pluralité de modules (3) de membranes de filtration jusqu'à la sortie (207) comme le fluide de sortie.

7. Récipient (1) selon la revendication 6, **caractérisé en ce que** la pluralité de modules (3) de membranes de filtration sont configurés de telle façon qu'un fluide devant être filtré est filtré par des membranes de la pluralité de modules (3) de membranes de filtration et que le fluide filtré est guidé jusqu'aux surfaces supérieures circulaires de la pluralité de modules (3) de membranes de filtration pour décharge.

8. Récipient (1) selon l'une quelconque des revendications précédentes, **caractérisé en ce que** le collecteur (105) est agencé de telle façon que le fluide de sortie est acheminé jusque dans une buse (207) pendant le fonctionnement.

9. Récipient (1) selon l'une quelconque des revendications précédentes, **caractérisé en ce que** la pluralité de modules (3) de membranes de filtration comprenant chacun une pluralité de membranes de filtration.

10. Récipient (1) selon l'une quelconque des revendications précédentes, **caractérisé en ce que** chacun des modules (3) de membranes de filtration est sous forme cylindrique.

11. Récipient (1) selon l'une quelconque des revendications précédentes, **caractérisé en ce que** le récipient (1) comprenant en outre des canaux d'air (701) pour un lavage à l'air et/ou des canaux (700) pour renvoyer un fluide de nettoyage lors d'un lavage à contre-courant.
